# EUROPEAN PATENT SPECIFICATION

(11) **EP 1 420 494 B1**
(45) Date of publication and mention of the grant of the patent: **23.12.2009**
(21) Application number: 03380204.2
(22) Date of filing: 18.09.2003
(51) Int. Cl.: H02G 3/10

(54) **Electric mechanism adapter for surface installations**
Elektrische Gerätadapter für oberflächige Einrichtungen
Adaptateur de mécanisme électrique pour des installations en surface

(30) Priority: 18.11.2002 ES 200202769 U
(43) Date of publication of application: 19.05.2004
(73) Proprietor: Unex Aparellaje Electrico S.L., 08903 L'Hospitalet de Llobregat (Barcelona) (ES)
(72) Inventor: Benito Navazo, Juan Manuel, 08290 Sant Cugat Del Valles (Barcelona) (ES)
(74) Representative: Curell Aguilà, Marcelino

(56) References cited:
- US-A- 5 486 650
- US-B1- 6 342 675

## Description

### Field of the invention

This invention relates to an electrical mechanism adapter for surface installations, and in particular to a box-shaped device which allows such electrical mechanisms (switches, plug assemblies, fuses, etc) to be mounted with respect to electrical conductor installations wherein such electrical conductors are housed in surface ducts such as those constituted by a U-shaped base profile having a removable cover, which are extruded in synthetic plastics material.

### State of the art

In said surface installations, electrical mechanisms are installed immediately adjacent to the ducts or at the duct ends, and are connected to the electrical conductors, firstly, by means of through holes made in the duct lateral surfaces, and secondly, directly at the open end, such being performed, in all circumstances, with the aid of a box housing the electrical mechanism, screening and protecting the cables emerging from the duct and the connections thereof to the electrical mechanism.

With the aim of standardising and effecting in a secure manner the mounting of such electrical mechanisms in surface electrical installations, avoiding a recourse to non-standard mounting solutions and the use of parts lying to hand, several different devices have been developed to adapt mechanisms to the electrical installation ducts; one may note inter alia: the adapters disclosed in the Spanish utility models U9001305 and U9001306, which do not resolve the problem, since said adapters are comprised of an excessive number of parts requiring cumbersome assembly, and, what is more, in the second utility model openings need to be made in the duct by means of manual cutting; the adapter device described in the Spanish utility model U9301856, whose practical application was only to those ducts having reduced dimensions, especially as regards height, which are known as "mouldings", furthermore said adapter only allowed one mechanism to be incorporated; the casing which is described in the Spanish utility model U9902973, whose installation was only possible in the interior of normal ducts and of which casings several could be aligned to mount more than one of said mechanisms; and finally the adapter subject of the Spanish utility model U200200013, which also failed to resolve the problem by being uniquely suitable for "mouldings" duct installations and which did not allow the installation of more than one of said mechanisms.

An adapter is therefore desirable which mounts electrical mechanisms with respect to surface installations comprising conventional ducts, including "mouldings", which would allow, with a single adapter, mounting of two or more electrical mechanisms, which would be constituted from few parts requiring assembly, and which would be versatile, to a great extent, to couple with different duct sizes, requiring a minimum number of parts for coupling or connecting to said ducts.

Document US-B1-6342675 discloses an electrical mechanism adapter for surface installations, consisting in a feed through receptacle box assembly which includes a base member and a housing or covering member for supporting a receptacle and connecting to a raceway. A channel member is removably coupled to the base member to provide a closed passage for feeding a wire or a cable through the covering member. The base member has a level polygonal form and has guide columns for coupling with the covering member, which has a prismatic form with open bases. In one embodiment, the open base of the covering member which is not applied against the base member has a central bridging member which is parallel and equidistant from two of the opposite facing sides of said covering member, and has a lip or stepped portion in each of the inner edges of said opposing sides and in both edges of said central bridging member, said lip or stepped portion being intended to receive a cover plate.

### Summary of the invention

In accordance with the abovementioned requirements, the electrical mechanism adapter for surface installations was developed which is the subject of the present invention, and which is constituted by a base member having a level polygonal form, with guide columns for coupling with a covering member having a prismatic form with open-bases, one of said bases being applied against said base member and the other having a lip in each of the two inner edges of two of its opposed sides and in both edges of at least one central bridging member which is parallel and equidistant to said opposite sides, whilst the walls of the covering member between which extends said central bridging member have two recesses, one on each side of the longitudinal plane of symmetry of said central bridging member, a central coupling guide for a penetration member and two end coupling guides for two encasement members of which one is intended for coupling with a shutting member and the other is intended for coupling with a connection member for an electrical conductor duct.

Preferably, the central bridging member of the covering member has a longitudinal plane of symmetry which is coplanar with a base member separating partition over which the central bridging member is superposed, said partition having two independent depressions which may be removed by breaking and/or by deformation to constitute recesses for passage from one side to another of the partition.

Advantageously, the lips provided in both edges of the central bridging member and in the inner edges of the two sides of the covering member opposite the central bridging member have longitudinal ports.

Preferably, said central guide of the walls between which extends the central bridging member, arranged between the two contiguous recesses in each of said walls, has a T-shaped straight section and a length which is less than the height of the wall whereon it is arranged.

Advantageously, said end guides are arranged in the outer face of brackets disposed at the ends of the walls between which extends the central bridging member, and said end guides have a wide running slot shape.

Preferably, the ends of the walls between which extends the central bridging member have at the lower part thereof a trough-like member delimited by the wall itself, the end guide corresponding to said wall and a low delimiting wall, said trough-like member having an opening in the base thereof and a small aperture, at the level of said base, which opens in the wide running slot of the corresponding end guide.

Preferably, the guide columns of the base member are arranged so as to coincide with the inner dihedrals of the covering member, said guide columns being of a dihedral structure and constituting low end walls on the parts of said base member which correspond with the walls of the covering member between which extends the central bridging member, and a central partition which is arranged so as to coincide with the back of the central guide of said covering member.

Advantageously, in a first version, the encasement member is constituted by a bridge-shaped body, having a U-shaped straight section, which has a large central recess suitable for the insertion of a connection member for an electrical conductor duct, and in a second version, the encasement member is constituted by a bridge-shaped body, with a U-shaped straight section, which has a central recess suitable for the insertion of a shutting member.

Advantageously, the penetration member is constituted by a plate which has, at the back, two rails which co-operate with the covering member's central guide and, at the front, two cone frustum tubular protruding through members.

Finally, the invention envisages that, preferably, between the walls of the covering member which have recesses, extend a plurality of bridging members which are equidistant with respect to one another and with respect to the inner edges of the other walls.

### Brief description of the drawings

To aid in understanding the preceding ideas, a preferred embodiment of the invention is described below, with reference to the accompanying illustrative drawings, in which:
Figure 1, shows an enlarged perspective view of an electrical mechanism adapter according to the invention, including all the parts and members which could comprise such and which are used according to and depending on the installation.
Figure 2, shows, in perspective, the mechanism adapter of the above figure, assembled and seen from a side prepared for the insertion of the end of a duct.
Figure 3, shows, in perspective, the mechanism adapter of figure 1, assembled and seen from a side prepared for abutment to the side of a duct.
Figure 4, shows, in perspective, the mechanism adapter of figure 2, seen from the face opposite that of the previous figure.
Figure 5, shows, in partly sectioned plan view, the adapter of figure 3 abutting a duct with electrical conductors that connect to the electrical mechanisms mounted in the same.

### Detailed description of some embodiments of the invention

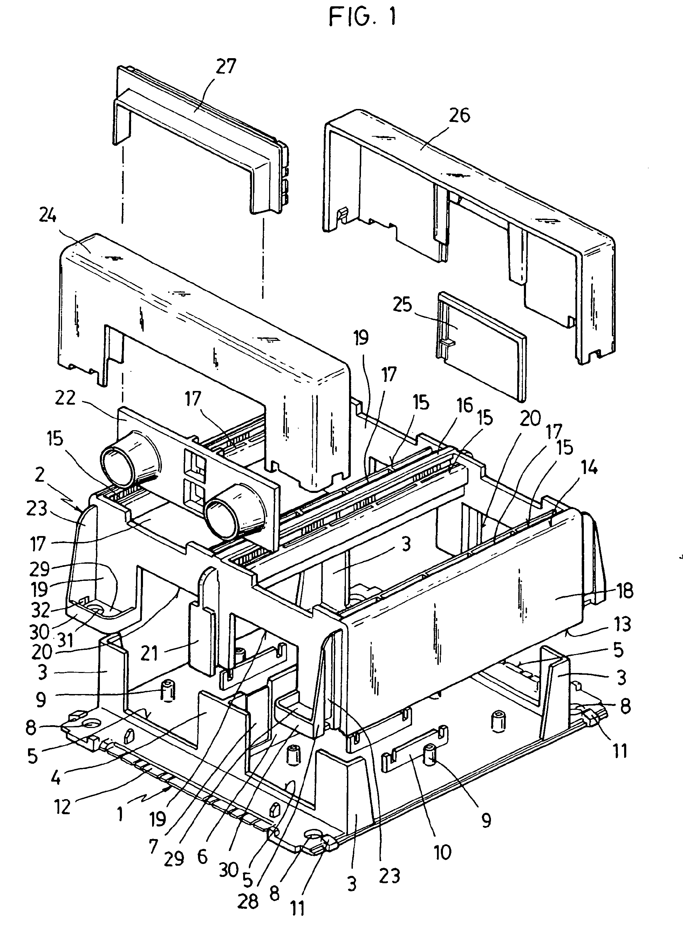

As is particularly shown in figure 1, an electrical mechanism adapter for surface installations is constituted by a base member 1, having a level polygonal form, which is suitable for supporting a covering member 2, having a prismatic form with open bases.

The base member 1 has cornered guide columns 3, and between two opposite pairs of said contiguous columns two central partitions 4 flanked by two recesses 5, which are linked by a separator partition 6 which divides the surface of the base member 1 into two equal mirror symmetrical parts and which has two depressions 7 which are independent and removable by breaking or deformation to constitute recesses for passage from one side to another of said separator partition 6.

Likewise, the base member 1 has openings 8 for fixation, by screws, which are applied against the covering member 2, and also has pins 9 and reglets 10 for positioning, guide teeth 11 and divisible tabs 12.

With respect to the covering member 2, it is applied with respect to its lower open base 13 against said base member, whilst the upper open base 14 has a lip 15 in each of the inner edges of two of its opposite facing sides and in both edges of at least one central bridging member 16, which is equidistant and parallel to said opposite facing sides. Said lips 15 have longitudinal ports 17.

The covering member 2 has two opposite smooth walls 18 and the other two walls 19, between which extends the central bridging member 16, have two recesses 20 one on each side of the longitudinal plane of symmetry of said central bridging member 16, a coupling central guide 21 for a penetration member 22 and two coupling end guides 23 for an encasement member 24, in which couples a connection member 27, and an encasement member 26, in which couples a shutting member 25.

The central guide 21 with a T-shaped straight section has a length less than the height of said wall, which is flush with the edge of such with respect to the lower part thereof.

Walls 19 have at their ends perpendicular brackets 28, which in their outer face have the end guide 23 with a wide running slot shape. These walls 19 have at their lower part a trough-like member 29 that is delimited by the wall 19 itself, the end guide 23 and a low delimiting wall 30, with an opening 31 at its base. In the end guide 23 opens, at the level of said base, an aperture 32 which co-operates with the guide teeth 11 which correspond with said end guides 23.

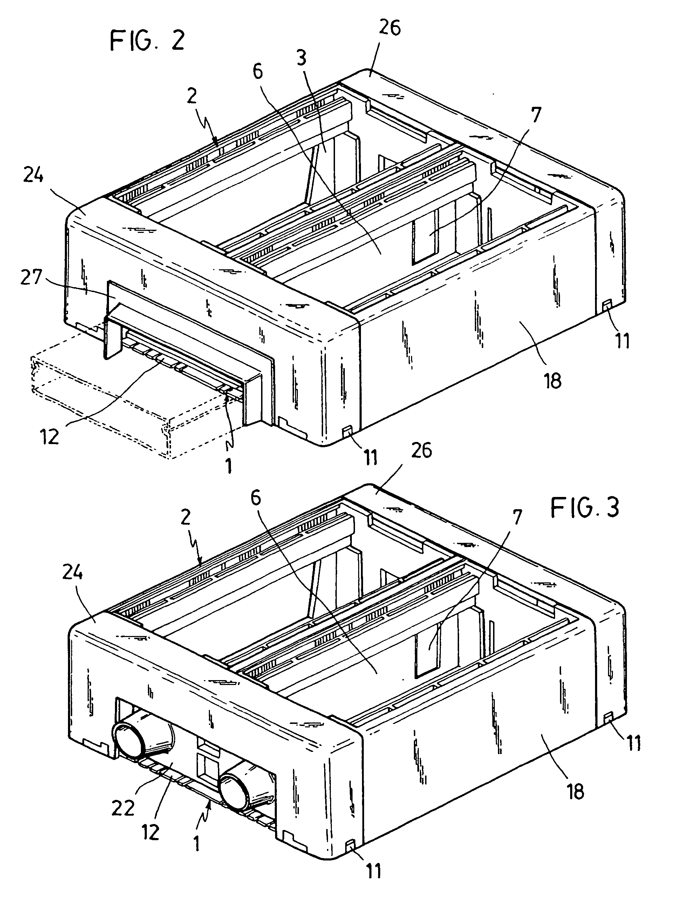

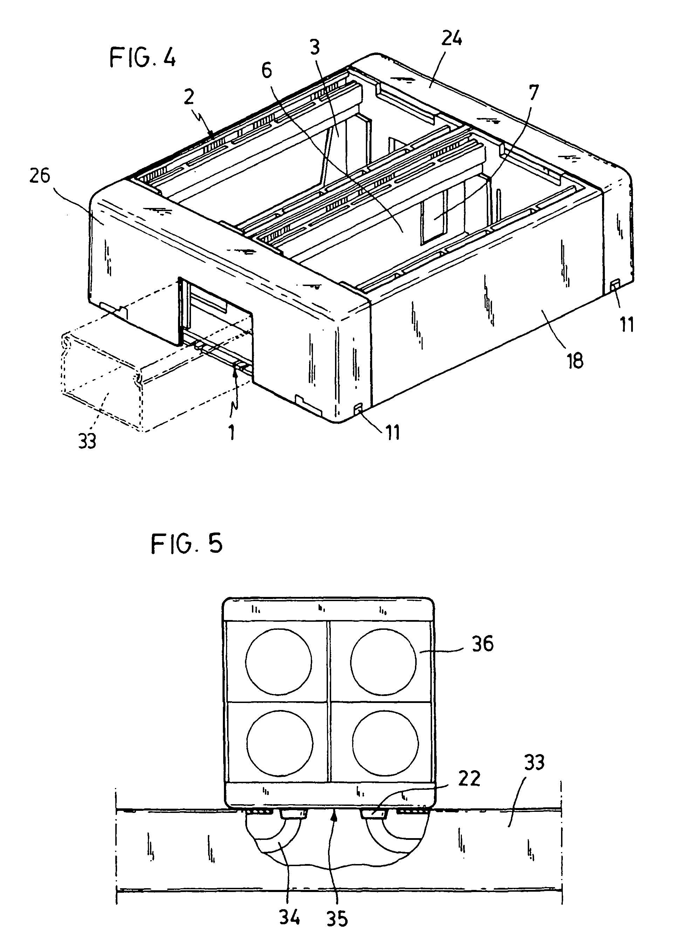

As may be observed in figures 2, 4 and 5, a duct 33 houses electrical conductors 34 which penetrate in the adapter, either directly, as in figures 2 and 4, or through the penetration member 22, as is the case in figure 5 in which the adapter is arranged laterally with respect to the duct 33, which in turn has an opening 35 through which penetrate the cantilevered mouths of said penetration member 22 and through which pass the electrical conductors 34 connected to the electrical mechanisms 36.

In the drawings the adapter according to the invention can mount four electrical mechanisms 36, but obviously the adapter can be manufactured for a distinct number of such mechanisms.

## Claims

1. Electrical mechanism adapter for surface installations, in particular a device suitable for mounting electrical mechanisms with respect to an installation having electrical conductors housed in surface ducts such as those constituted by base profiles and covering profiles, said electrical mechanism adapter being constituted by a base member (1) with a level polygonal form which has guide columns (3) for coupling with a covering member (2) having a prismatic form with open bases (13, 14), of which open bases (13, 14) one (13) is applied against said base member (1) and the other (14) has a lip (15) in each of the inner edges of two of its opposing sides and in both edges of at least one central bridging member (16) which is parallel and equidistant from said opposite facing sides, **characterised in that** the walls (19) of the covering member (2) between which extends said central bridging member (16) have two recesses (20) one on each side of the longitudinal plane of symmetry of said central bridging member (16), a central coupling guide (21) for a penetration member (22) and two end coupling guides (23) for two encasement members (24, 26) of which one (26) is intended to couple with a shutting member (25) and the other (24) is intended to couple with a connection member (27) for an electrical conductor duct (33).

2. Electrical mechanism adapter for surface installations according to claim 1, **characterised in that** the central bridging member (16) of the covering member (2) has its longitudinal plane of symmetry coplanar with a base member (1) separating partition (6) on which said central bridging member (16) is superposed, said partition (6) having two independent depressions (7) which can be removed by breaking and/or deformation to constitute recesses for passage from one side to another of said partition (6).

3. Electrical mechanism adapter for surface installations according to claims 1 or 2, **characterised in that** the lips (15) provided in both edges of the central bridging member (16) and in the inner edges of the two sides of the covering member (2) opposite to said central bridging member (16), have longitudinal ports (17).

4. Electrical mechanism adapter for surface installations according to any of claims 1 to 3, **characterised in that** said central guide (21) of the walls (19) between which extends the central bridging member (16), arranged between the two contiguous recesses (20) in each of said walls (19), has a T-shaped straight section and a length which is less than the height of the wall (19) whereon it is arranged.

5. Electrical mechanism adapter for surface installations according to any of claims 1 to 4, **characterised in that** said end guides (23) are arranged in the outer face of brackets (28) located at the ends of the walls (19) between which extends the central bridging member (16), said end guides (23) having a wide running slot shape.

6. Electrical mechanism adapter for surface installations according to any of claims 1 to 5, **characterised in that** the ends of the walls (19) between which extends the central bridging member (16) have at a lower part thereof a trough-like member (29) delimited by the wall (19) itself, the end guide (23) corresponding to said wall (19) and a low delimiting wall (30), said trough-like member (29) having an opening (31) in its base and a small aperture (32), at the level of said base, which opens in the wide running slot of the corresponding end guide (23).

7. Electrical mechanism adapter for surface installations according to any of claims 1 to 6, **characterised in that** the guide columns (3) of the base member (1) are arranged to coincide with the inner dihedrals of the covering member (2), said guide columns (3) being of dihedral structure and constituting low end walls on the parts of said base member (1) which correspond with the walls (19) of the covering member (2) between which extends the central bridging member (16), and a central partition (4) which is arranged so as to coincide with the back of the central guide (21) of said covering member (2).

8. Electrical mechanism adapter for surface installations according to claim 6 or 7, **characterised in that** the base member (1) has a tooth (11), which co-operates with each small aperture (32) present in the wide running slot (23) of the covering member (2), serving as means for guiding the covering member (2) with respect to the base member (1).

9. Electrical mechanism adapter for surface installations according to any of claims 1 to 8, **characterised in that** the encasement member (24) is constituted by a bridge-shaped body, having a U-shaped straight section, which has a large central recess suitable for the insertion of a connection member (27) for an electrical conductor duct (33).

10. Electrical mechanism adapter for surface installations according to any of claims 1 to 8, **characterised in that** the encasement member (26) is constituted by a bridge-shaped body, having a U-shaped straight section, which has a large central recess suitable for the insertion of a shutting member (25).

11. Electrical mechanism adapter for surface installations according to any of claims 1 to 10, **characterised in that** the penetration member (22) is constituted by a plate which has, at the back, two rails complementary with respect to the central guide (21) of the covering member (2) and, at the front, two cone frustum tubular protruding through members.

12. Electrical mechanism adapter for surface installations according to any of claims 1 to 11, **characterised in that** between the walls (19) of the covering member (2) which has recesses (20), extends a plurality of bridging members equidistant with respect to each other and with respect to the inner edges of the other walls.

## Patentansprüche

1. Adapter für elektrische Anlagen zur Einrichtung auf Oberflächen, insbesondere eine geeignete Vorrichtung zum montieren elektrischer Anlagen bezüglich einer Einrichtung zum Unterbringen elektrischer Leitungen in oberflächlichen Kanälen, wie zum Beispiel diejenigen, die aus Basis- und Deckelprofilen gebildet sind, wobei der Adapter für elektrische Anlagen aus einem Basisteil (1) mit einer ebenen polygonalen Form gebildet ist, das Führungsstützen (3) zur Verbindung mit dem Deckelteil (2) besitzt, welches eine prismatische Form mit offenen Böden (13, 14) hat, wobei einer (13) der offenen Böden (13, 14) gegen das Bodenteil (1) anlehnt und das andere (14) in jeder der inneren Kanten der zwei gegenüberliegenden Seiten und in beiden Kanten mindestens eines zentralen Brückenteils (16) eine Lippe (15) besitzt, die parallel und äquidistant zu den gegenüberliegenden Seiten ist, **dadurch gekennzeichnet, dass** die Wände (19) des Deckelteils (2), zwischen denen sich das zentrale Brückenteil (16) erstreckt, zwei Aussparungen (20) auf jeder Seite der longitudinalen Symmetrieflächen des mittleren Brückenteils (16), eine mittlere Verbindungsführung (21) für ein Durchbruchteil (22) und zwei Endverbindungsführungen (23) für zwei Verkleidungsteile (24, 26) besitzen, von denen eines (26) zur Verbindung mit einem Schließteil (25) vorgesehen ist und ein weiteres (24) zur Verbindung mit einem Verbindungsteil (27) für einen elektrischen Kabelkanal (33) vorgesehen ist.

2. Adapter für elektrische Anlagen zur Installation auf Oberflächen nach Anspruch 1, **dadurch gekennzeichnet, dass** das mittlere Brückenteil (16) des Deckelteils (2) eine longitudinale Symmetriefläche, die koplanar zu der den Bodenteil (1) unterteilenden Trennwand (6) ist, besitzt, auf dem das mittlere Brückenteil (16) aufliegt, wobei die Trennwand (6) zwei unabhängige Wandverdünnungen (7) besitzt, die durch Aufbrechen und/ oder Deformation entfernt werden können, um Aussparungen für den Durchgang von einer Seite zur anderen Seite der Trennwände (6) aufzubauen.

3. Adapter für elektrische Anlagen zur Installation auf Oberflächen nach Anspruch 1 oder 2, **dadurch gekennzeichnet, dass** die in beiden Kanten des mittleren Brückenteils (16) und in den inneren Kanten der zwei Seiten des Deckelteils (2) gegenüber des mittleren Brückenteils (16) versehene Lippen (15) longitudinale Anschlüsse (17) haben.

4. Adapter für elektrische Anlagen zur Installation auf Oberflächen nach einem der Ansprüche 1 bis 3, **dadurch gekennzeichnet, dass** die mittlere Führung (21) der Wände (19), zwischen denen sich das mittlere Brückenteil erstreckt (16), zwischen den zwei angrenzenden Aussparungen (20) in jedes der Wände (19) anliegt, einen T-förmigen geraden Abschnitt besitzt und eine Länge, die kürzer als die Höhe der Wand (19) auf dem es anliegt ist.

5. Adapter für elektrische Anlagen zur Einrichtung auf Oberflächen nach einem der Ansprüche 1 bis 4, **dadurch gekennzeichnet, dass** die Endführungen (23) an den Bügeln (28) der Außenfläche angeordnet sind, die sich an den Enden der Wände (19) zwischen denen sich das mittlere Brückenteil erstreckt (16), sich befinden, wobei die Endführungen (23) eine weitlaufende Spaltenform besitzen.

6. Adapter für elektrische Anlagen zur Einrichtung auf Oberflächen nach einem der Ansprüche 1 bis 5, **dadurch gekennzeichnet, dass** die Enden der Wände (19), zwischen denen sich das mittlere Brückenteil erstreckt (16), am unteren Teil davon ein muldenartiges Teil (29) besitzen, das durch die Wand (19) selbst, der zu der Wand (19) entsprechenden Endführung (23) und einer unteren begrenzenden Wand (30) begrenzt ist, wobei das muldenartige Teil (29) eine Öffnung (31) in seinem Boden und eine kleine Öffnung (32) auf der Höhe des Bodens besitzt, die sich zur weitverlaufenden Spalt der entsprechenden Endführung (23) öffnen.

7. Adapter für elektrische Anlagen zur Einrichtung auf Oberflächen nach einem der Ansprüche 1 bis 6, **dadurch gekennzeichnet, dass** die Führungsstützen (3) des Bodenteils (1) so angeordnet sind, dass sie mit den inneren diederischen Flächen des Deckelteils (2) zusammenfallen, wobei die Führungsstützen (3), die eine diederische Struktur haben und die unteren Endwände auf den Teilen des Bodenteils (1) bilden, die mit den Wänden (19) des Deckelteils (2), zwischen denen sich das mittlere Brückenteil (16) erstreckt, decken, und einen mittleren Abschnitt (4) bilden, der so angeordnet ist, um mit dem hinteren Teil der zentralen Führung (21) des Deckelteils (2) zusammenzufallen.

8. Adapter für elektrische Anlagen zur Einrichtung auf Oberflächen nach Anspruch 6 oder 7, **dadurch gekennzeichnet, dass** das Bodenteil (1) einen Zahn (11) besitzt, der zusammen mit jeder (32) in dem weitverlaufenden Schlitz (23) des Deckelteils (2) vorhandenen kleinen Öffnung zusammenwirkt und als Mittel zur Führung des Deckelteils (2) in Bezug auf das Bodenteil (1) dient.

9. Adapter für elektrische Anlagen zur Einrichtung auf Oberflächen nach einem der Ansprüche 1 bis 8, **dadurch gekennzeichnet, dass** das Verkleidungsteil (24) durch einen brückenförmigen Körper gebildet ist, der einen geraden U-förmigen Abschnitt besitzt, der eine lange mittlere Aussparung hat, die geeignet ist, um ein Verbindungsteil (27) eines elektrischen Kabelkanals (33) einzufügen.

10. Adapter für elektrische Anlagen zur Einrichtung auf Oberflächen nach einem der Ansprüche 1 bis 8, **dadurch gekennzeichnet, dass** das Verkleidungsteil (26) durch einen brückenförmigen Körper gebildet ist, der einen geraden U-förmigen Abschnitt besitzt, der eine lange mittlere Aussparung hat, die geeignet ist, um ein Schließteil (25) einzufügen.

11. Adapter für elektrische Anlagen zur Einrichtung auf Oberflächen nach einem der Ansprüche 1 bis 10, **dadurch gekennzeichnet, dass** das Durchgangsteil (22) durch eine Platte gebildet ist, die hinten zwei komplementäre Schienen in Bezug auf die mittlere Führung (21) des Deckelteils (2) und vorne zwei kegelstumpf- und röhrenförmige Durchtrittselemente besitzt.

12. Adapter für elektrische Anlagen zur Einrichtung auf Oberflächen nach einem der Ansprüche 1 bis 11, **dadurch gekennzeichnet, dass** sich zwischen den Wänden (19) des Deckelteils (2), das Aussparungen (20) besitzt, eine Vielzahl von Brückenteilen äquidistant in Bezug zueinander und in Bezug zu den inneren Kanten der anderen Wände erstreckt.

## Revendications

1. Adaptateur de mécanisme électrique pour des installations en surface, en particulier un dispositif approprié pour monter des mécanismes électriques par rapport à une installation ayant des conducteurs électriques logés dans des conduits en surface tels que ceux constitués par des profils de base et des profils de couverture, ledit adaptateur de mécanisme électrique étant constitué par un élément de base (1) avec une forme polygonale de niveau qui a des colonnes de guidage (3) pour s'accoupler à un élément de couverture (2) ayant une forme prismatique avec des bases ouvertes (13, 14), dont une (13) des bases ouvertes (13, 14) est appliquée contre ledit élément de base (1) et l'autre (14) possède une lèvre (15) dans chacun des bords internes de deux de ses côtés opposés et dans les deux bords d'au moins un élément d'entretoise central (16) qui est parallèle et équidistant desdits côtés opposés en regard, **caractérisé en ce que** les parois (19) de l'élément de couverture (2) entre lesquelles s'étend ledit élément d'entretoise central (16) possèdent deux cavités (20), une de chaque côté du plan de symétrie longitudinal dudit élément d'entretoise central (16), un guide de couplage central (21) pour un élément de pénétration (22) et deux guides de couplage d'extrémité (23) pour deux éléments d'enveloppement (24, 26) dont un (26) est destiné à s'accoupler à un élément d'obturation (25) et l'autre (24) est destiné à s'accoupler à un élément de connexion (27) pour un conduit de conducteur électrique (33).

2. Adaptateur de mécanisme électrique pour des installations en surface selon la revendication 1, **caractérisé en ce que** l'élément d'entretoise central (16) de l'éléments de couverture (2) a son plan de symétrie longitudinal coplanaire avec une cloison de séparation (6) d'élément de base (1) sur laquelle ledit élément d'entretoise central (16) est superposé, ladite cloison (6) ayant deux cavités indépendantes (7) qui peuvent être enlevées par rupture et/ou déformation pour constituer des cavités pour passer d'un côté à l'autre de ladite cloison (6).

3. Adaptateur de mécanisme électrique pour des installations en surface selon la revendication 1 ou 2, **caractérisé en ce que** les lèvres (15) fournies dans les deux bords de l'élément d'entretoise central (16) et dans les bords internes des deux côtés de l'élément de couverture (2) opposés audit élément d'entretoise central (16), possèdent des ports longitudinaux (17).

4. Adaptateur de mécanisme électrique pour des installations en surface selon l'une quelconque des revendications 1 à 3, **caractérisé en ce que** ledit guide central (21) des parois (19) entre lesquelles s'étend l'élément d'entretoise central (16), disposé entre les deux cavités contiguës (20) dans chacune desdites parois (19), possède une section droite en forme de T et une longueur qui est inférieure à la hauteur de la paroi (19) sur laquelle elle est disposée.

5. Adaptateur de mécanisme électrique pour des installations en surface selon l'une quelconque des revendications 1 à 4, **caractérisé en ce que** lesdits guides d'extrémité (23) sont disposés dans la surface externe de crochets (28) situés aux extrémités des parois (19) entre lesquelles s'étend l'élément d'entretoise central (16), lesdits guides d'extrémité (23) ont une forme de fente à passage large.

6. Adaptateur de mécanisme électrique pour des installations en surface selon l'une quelconque des revendications 1 à 5, **caractérisé en ce que** les extrémités des parois (19) entre lesquelles s'étend l'élément d'entretoise central (16) ont sur une partie inférieure de celui-ci un élément ressemblant à une cuvette (29) délimité par la paroi (19) elle-même, le guide d'extrémité (23) correspondant à ladite paroi (19) et une paroi de délimitation inférieure (30), ledit élément ressemblant à une cuvette (29) ayant une ouverture (31) dans sa base et une petite ouverture (32), au niveau de ladite base, qui s'ouvre dans la fente à passage large du guide d'extrémité correspondant (23).

7. Adaptateur de mécanisme électrique pour des installations en surface selon l'une quelconque des revendications 1 à 6, **caractérisé en ce que** les colonnes de guidage (3) de l'élément de base (1) sont disposées pour coïncider avec les dièdres internes de l'élément de couverture (2), lesdites colonnes de guidage (3) étant de structure diédrique et constituant des parois d'extrémité inférieure sur les parties dudit élément de base (1) qui correspond aux parois (19) de l'élément de couverture (2) entre lesquelles s'étend l'élément d'entretoise central (16), et une cloison centrale (4) qui est disposée afin de coïncider avec le dos du guide central (21) dudit élément de couverture (2).

8. Adaptateur de mécanisme électrique pour des installations en surface selon la revendication 6 ou 7, **caractérisé en ce que** l'élément de base (1) a une dent (11), qui coopère avec chaque petite ouverture (32) présente dans la fente à passage large (23) de l'élément de couverture (2), servant comme moyen pour guider l'élément de couverture (2) par rapport à l'élément de base (1).

9. Adaptateur de mécanisme électrique pour des installations en surface selon l'une quelconque des revendications 1 à 8, **caractérisé en ce que** l'élément d'enveloppement (24) est constitué par un corps en forme d'entretoise, ayant une section droite en forme de U, qui a une grande cavité centrale appropriée pour l'insertion d'un élément de connexion (27) pour un conduit de conducteur électrique (33).

10. Adaptateur de mécanisme électrique pour des installations en surface selon l'une quelconque des revendications 1 à 8, **caractérisé en ce que** l'élément d'enveloppement (26) est constitué par un corps en forme d'entretoise, ayant une section droite en forme de U, qui a une grande cavité centrale appropriée pour l'insertion d'un élément d'obturation (25).

11. Adaptateur de mécanisme électrique pour des installations en surface selon l'une quelconque des revendications 1 à 10, **caractérisé en ce que** l'élément de pénétration (22) est constitué par une plaque qui a, au dos, deux rails complémentaires par rapport au guide central (21) de l'élément de couverture (2) et, à l'avant, deux cônes tronqués tubulaires faisant saillie à travers des éléments.

12. Adaptateur de mécanisme électrique pour des installations en surface selon l'une quelconque des revendications 1 à 11, **caractérisé en ce qu'**entre les parois (19) et l'élément de couverture (2) qui a des cavités (20), s'étendent une pluralité d'éléments d'entretoise équidistants l'un par rapport à l'autre et par rapport aux bords internes des autres parois.
